# EUROPEAN PATENT APPLICATION

(11) **EP 1 717 685 A2**
(43) Date of publication of application: **02.11.2006**
(21) Application number: 06008027.2
(22) Date of filing: 18.04.2006
(51) Int. Cl.: G06F 3/048, G06F 21/00

(54) **Method for displaying data in mobile terminal**

(30) Priority: 28.04.2005 KR 20050035723
(71) Applicant: Samsung Electronics Co., Ltd., Suwon-si, Gyeonggi-Do (KR)
(72) Inventor: Park, Seong-Jin, Yeongtong-gu, Suwon-si, Gyeonggi-do (KR); Choe, Gwang-Woo, Yeongtong-gu, Suwon-si, Gyeonggi-do (KR)
(74) Representative: Lang, Johannes

(57) **Abstract**

A method for displaying data on a mobile terminal is provided. The method includes the steps of allowing a user to select specific data to be viewed; and displaying the selected data in a sliding manner. The sliding display of long text data provides convenience for the user to easily view the full text easily even without any additional key pressed.

## Description

### BACKGROUND OF THE INVENTION

### Field of the Invention

The present invention relates to a mobile communication terminal. More particularly, the present invention relates to a method for displaying a message on a mobile communication terminal.

### Description of the Related Art

Currently, mobile communication terminals have become popular and been developed to store and display large amounts of data and to implement various functions. Typically, when a new message is received, a mobile user has to press keys many times to view the full text of the received message together with the sender information. Even when the message contains important confidential information, it is displayed without making the information secure.

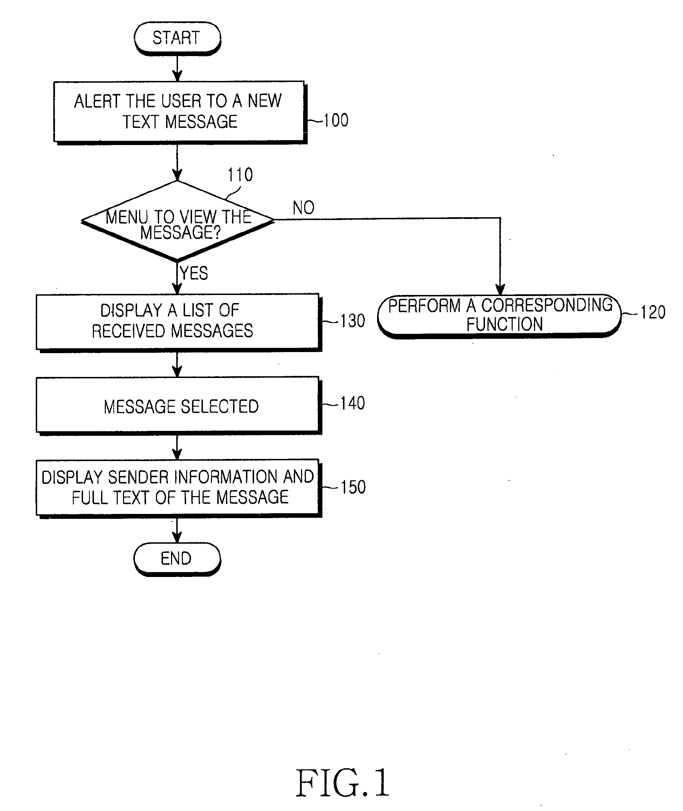

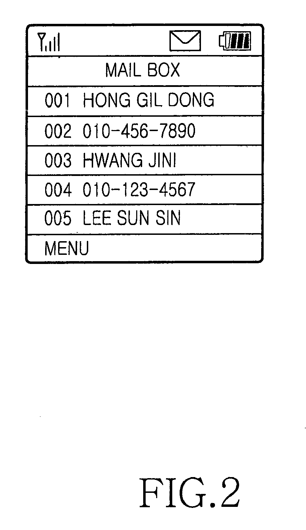

FIG. 1 is a flow chart illustrating a conventional process for displaying a received text message on a mobile terminal in the prior art. FIG. 2 is a view illustrating a conventional display of a list of received text messages. Referring to FIGs. 1 and 2, when a new message is received in a standby mode, a controller of the mobile terminal generates a sound, lamp flashes or vibration alert to inform the user of the new message at step 100. When the user presses a key, the controller determines whether the pressed key is a menu key for displaying a list of received text messages at step 110. If a key other than the menu key is pressed, the controller will perform a function corresponding to the key at step 120. If the menu key is pressed, the controller will display a list of the recently received text messages at step 130 as illustrated in FIG. 2, for example" names of the message senders if previously stored in a phonebook or telephone numbers if related names were not stored. The user may select any one of the received messages by using a direction key or a number key. The controller determines whether the user selects one of the received messages at step 140. When the user presses a key to view the selected message, the controller then displays the full text of the selected message together with the sender information at step 150.

In other words, the user has to take multiple steps of pressing a menu key to display a list of received text messages and selecting one from the displayed list to view the full text of the selected message. To view another message, the user has to close the currently displayed message and press a key to select the other message. It is troublesome and inconvenient for the user to press keys many times to view the full text and sender information of each received message.

### SUMMARY OF THE INVENTION

Accordingly, the present invention has been made to address the above-mentioned problems, and an object of the present invention is to provide a method for displaying a long text message on a mobile terminal in such a manner that a user can easily view the full text with minimal key pressings.

Another object of the present invention is to provide a method for protecting a text message through a security setting according to the content of the message.

In order to accomplish the above objects of the present invention, a method for displaying data on a mobile terminal is provided. The method comprises the steps of: allowing a user to select specific data to be displayed, and displaying the selected data in a sliding manner.

### BRIEF DESCRIPTION OF THE DRAWINGS

The above and other objects, features and advantages of the present invention will be more apparent from the following detailed description taken in conjunction with the accompanying drawings, in which:
FIG. 1 is a flow chart illustrating a conventional process for displaying a text message on a mobile terminal;
FIG. 2 is a view illustrating a conventional display of a list of received text messages on a mobile terminal;
FIG. 3 is a flow chart illustrating a process for displaying a text message on a mobile terminal according to an exemplary embodiment of the present invention;
FIGs. 4a through 4e are views illustrating exemplary displays of a list of received text messages on a mobile terminal according to an exemplary embodiment of the present invention;
FIG. 5 is a flow chart illustrating a process for displaying a text message in a mobile terminal according to an exemplary embodiment of the present invention; and
FIGs. 6a through 6c are views illustrating exemplary displays of a list of received text messages on a mobile terminal according to an exemplary embodiment of the present invention.

Throughout the drawings, like reference numerals will be understood to refer to like parts, components and structures.

### DETAILED DESCRIPTION OF EXEMPLARY EMBODIMENT

Hereinafter, exemplary embodiments of the present invention will be described with reference to the accompanying drawings. Although certain elements are specifically defined in the following description of the present invention, it will be obvious to those skilled in the art that such definitions of elements are merely to improve understanding of the present invention and that the present invention can be performed without such specific elements. Also, in the following description of the present invention, a detailed description of known functions and configurations incorporated herein will be omitted for clarity and conciseness.

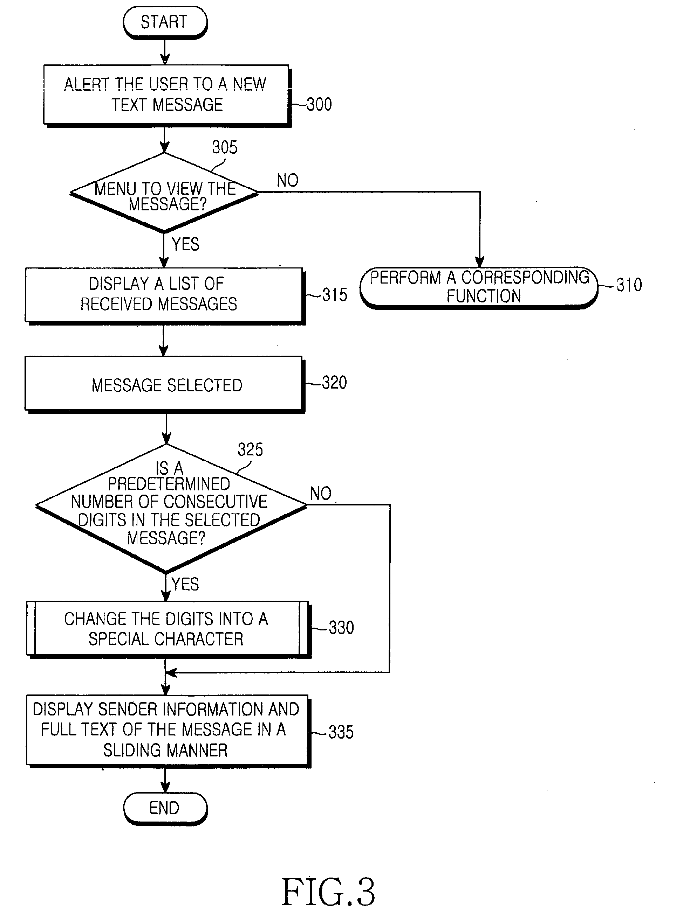

FIG. 3 is a flow chart illustrating a process for displaying a text message on a mobile terminal according to an exemplary embodiment of the present invention.

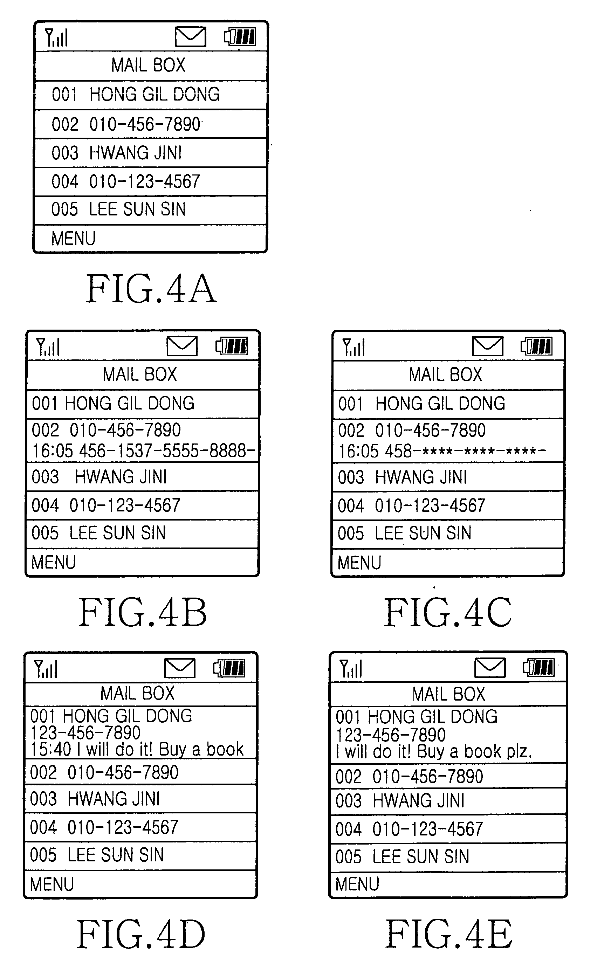

FIGs. 4a through 4e are views illustrating exemplary displays of a list of received text messages in a mobile terminal. Referring to FIGs. 3 and 4, when a new text message is received in a standby mode, a controller of the mobile terminal alerts a user to the new message by ringing, flashing a lamp or generating vibration at step 300. Then the controller determines whether the user has pressed a key to view the received message at step 305. If any other key is pressed, the controller will perform a function corresponding to the pressed key at step 310. If the key to view the received message is pressed, the controller will display sender information of recently received messages, in other words, a list of the names of message senders if previously stored in a phonebook or the telephone numbers if related names were not stored in the phonebook at step 315.

The user may select one of the received messages listed on the display as illustrated in FIG. 4a by using a direction key or a number key at step 320. The controller determines whether a predetermined number of consecutive digits are included in the selected message as illustrated in FIG. 4b at step 325. If the predetermined number of consecutive digits are included, the controller will recognize that security protection is required for the selected message and therefore will change each of the consecutive digits to a predetermined symbol or special character at step 330. In other words, a predetermined number of consecutive digits contained in a text message is recognized as confidential information to be protected, such as a bank account number or an ID number. The controller displays sender information of each received message in a different row and at the same time shows the full text of the selected message in a sliding manner, with the consecutive digits concealed by using a symbol as illustrated in FIG. 4c at step 335. Accordingly, the user can easily view the full text and sender information of any received message, without any additional key presses. Preferably, a message that is being displayed with its full text and sender information in a sliding manner should be distinguished by using a different font or color from the other messages in the other rows.

If the controller determines at step 325 that the selected message does not contain the predetermined number of consecutive digits, it will display sender information of each received message in a different row and will show the full text of the selected message in a sliding or scrolling manner as illustrated in FIGs. 4(d) and 4(e) at step 335. Accordingly, the user can view the full text and sender information of the selected message, without any additional key pressed to view the selected message.

In the process for displaying a message on a mobile terminal according to an exemplary embodiment of the present invention, the controller displays part of a long text message selected by the user in a corresponding row. If a predetermined number of consecutive digits are contained in the selected message, the controller will recognize the digits as confidential information to be protected and therefore will change the digits to a symbol or a special character. If the selected message is long text, it will be displayed in a sliding or scrolling manner in the corresponding row.

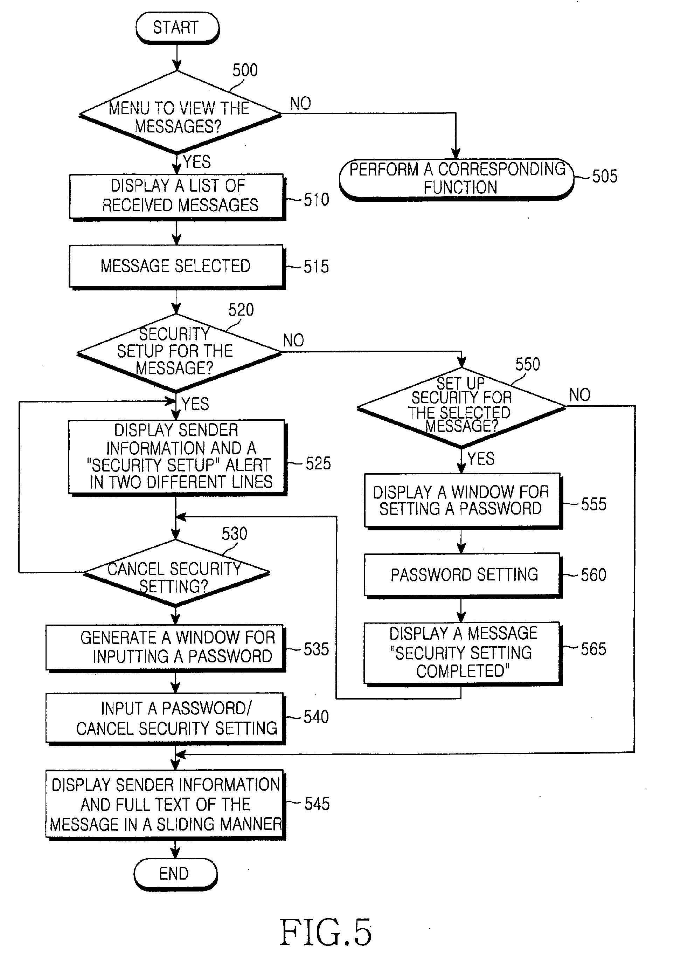

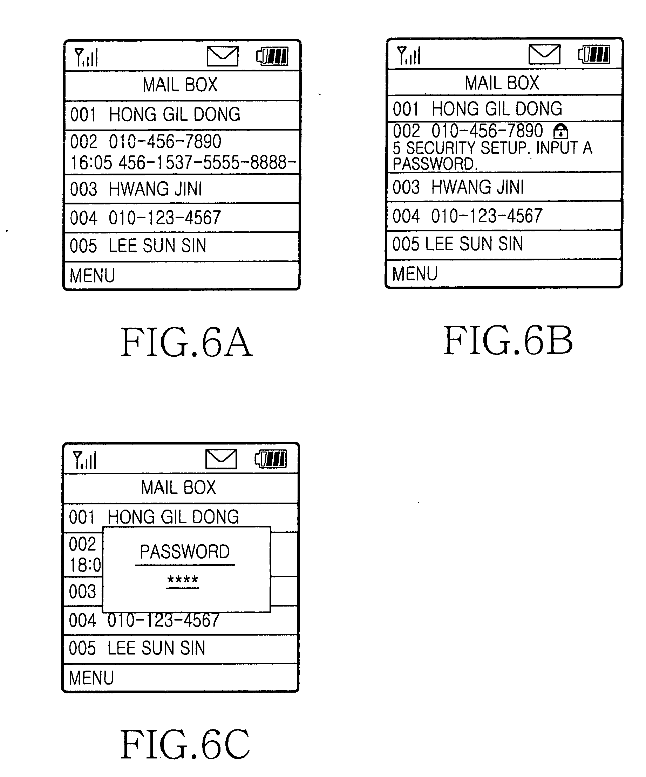

FIG. 5 is a flow chart illustrating a process for displaying a text message on a mobile terminal according to an exemplary embodiment of the present invention. FIGs. 6a through 6c are views illustrating exemplary displays of a list of received text messages on a mobile terminal according to an exemplary embodiment of the present invention. Referring to FIGs. 5 and 6, when a key is pressed in the standby mode, the controller of the mobile terminal determines whether the pressed key is a menu key to view received messages at step 500. If a key other than the menu key is pressed, the controller will perform a function corresponding to the key at step 505. If the menu key is pressed, the controller displays a list of received messages at step 510. The user may select one of the received messages listed on the display by using a direction key or a number key at step 515. Then the controller determines whether security protection has been established for the message selected at step 520. When the user wishes to protect a specific message based on certain standards of judgment, the user may establish a security password to protect the message. Upon determining that a security password has been established for the selected message at step 520, the controller proceeds to step 525.

At step 525, the controller displays a list of recently received messages comprising the selected one in different rows. At this time, a "security setup" alert is slidingly displayed in the row by displaying the sender information of the selected message. When the user presses a key during the display of the list, the controller determines whether the pressed key is to cancel the security setting for the selected message at step 530. In the affirmative, the controller generates a popup window for inputting a password previously established for the message at step 535. When the user inputs a password in the popup window at step 540, the controller determines whether the inputted password is identical to the previously input one in order to maintain or cancel the security setting for the message at step 540. When the security setting is cancelled upon determination at step 540, the controller displays sender information of each received message in a different row and shows the full text of the selected message in a sliding manner at step 545.

It the controller determines that security protection was not established for the selected message at step 520, it will proceed to step 550 to detect whether the user has selected a menu for security setting for the selected message. If not, the controller will proceed to step 545 to display the sender information of each received message in a different row and show the full text of the selected message in a sliding manner. If the user has selected the menu for security setting, the controller generates a window for inputting a security setting password for the message at step 555). Upon input of a specific password at step 560, the controller completes the security setting for the selected message at step 565. Accordingly, when the same message is selected again, a "security setup" alert, instead of the full text of the message, will be slidingly displayed in the corresponding row.

As explained above, when the user presses a key to view received messages, sender information of each received message is displayed in a different row. When the user selects a message for which a security password has been previously set, a "security setup" alert is slidingly displayed in the row displaying the sender information of the selected message. When the user inputs a password set for the message, the security setting is cancelled and the full text of the message is slidingly displayed in the row.

The sliding display of a long text message according to an exemplary embodiment of the present invention provides convenience for the user to easily view the full text of the message even without additional key pressings.

Although exemplary embodiments of the present invention have been described for illustrative purposes, those skilled in the art will appreciate that various modifications, additions and substitutions are possible, without departing from the scope and spirit of the invention. Although a text message has been explained as data displayed on the display in a mobile terminal, any long text data can be displayed in a sliding manner, enabling a user to view the entire text without additional key pressings. According to an exemplary embodiment of the present invention, a text message containing a predetermined number of consecutive digits is recognized as a confidential message subject to security protection. It is also possible to previously input a specific word so that a message containing the same word can be recognized as a confidential message. Therefore, various modifications, additions and substitutions can be made to the present invention, without departing from the scope and spirit of the invention as disclosed in the accompanying claims, including the full scope of equivalents thereof.

## Claims

1. A method for displaying data on a mobile terminal, comprising the steps of:
allowing a user to select specific data to be viewed; and
displaying the selected data in a sliding or scrolling manner.

2. The method as claimed in claim 1, wherein said data comprises at least one of a text message, email and phonebook data.

3. The method as claimed in claim 1, wherein sender information and content of said data are displayed in different rows when said data is a text message or an email.

4. The method as claimed in claim 1, wherein said selected data, if containing a predetermined number of consecutive digits, is set for security protection.

5. The method as claimed in claim 4, wherein the security protection for said selected data is established by using a password inputted by a user.

6. The method as claimed in claim 1, wherein a predetermined message informing of a security setting for said selected data is displayed in a sliding or scrolling manner.

7. A method for displaying data on a mobile terminal, which comprises the steps of:
allowing a user to select specific received data;
determining whether the selected data contains a predetermined word or a predetermined number of consecutive digits;
when the selected data contains a predetermined word or number, recognizing the word or the number as confidential information to be protected and changing the word or the number to a specific symbol or special character for security protection; and
displaying the selected data in a sliding or scrolling manner with the predetermined word or number being changed to the specific symbol or special character.

8. The method as claimed in claim 7, further comprising the step of allowing the user to input a password before changing the predetermined word or number to the specific symbol or special character for security protection.

9. The method as claimed in claim 7, wherein sender information and content comprising the predetermined word or number of said selected data are displayed in different rows.

10. The method as claimed in claim 7, wherein said selected data is recognized as containing confidential information when it contains a specific word or number previously input by the user or a predetermined number of consecutive digits.
